# EUROPEAN PATENT SPECIFICATION

(11) **EP 1 914 404 B1**
(45) Date of publication and mention of the grant of the patent: **03.02.2010**
(21) Application number: 07251540.6
(22) Date of filing: 10.04.2007
(51) Int. Cl.: F02B 61/06, F16H 57/04, F16C 3/14

(54) **Vehicle transmission**
Fahrzeuggetriebe
Transmission de véhicule

(30) Priority: 20.10.2006 EP 06255406
(43) Date of publication of application: 23.04.2008
(73) Proprietor: Kwang Yang Motor Co., Ltd., San-Min Dist., Kaohsiung City (TW)
(72) Inventor: Ho, Chao-Chang, Feng Shan City Kaohsiung Hsien (TW)
(74) Representative: Pratt, David Martin

(56) References cited:
- JP-A- 2003 172 437
- US-A1- 2004 094 343

## Description

This invention relates to a vehicle transmission, and more particularly to a vehicle transmission that includes a wet clutch installed on a crankshaft.

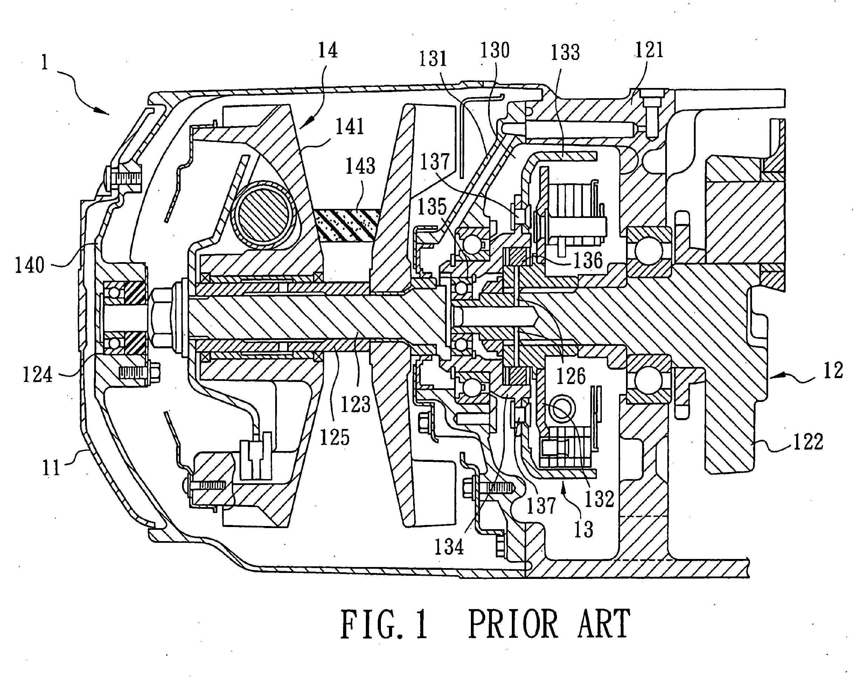

JP 2003 172437 A and US 2004/094343 A1 each disclose a vehicle transmission according to the preamble of claim 1. Referring to Fig. 1, a conventional vehicle transmission 1 is adapted to transmit power from an engine of a vehicle, such as an all-terrain vehicle, a motorcycle, etc., to a rear wheel (not shown) of the vehicle. The conventional vehicle transmission 1 includes a crankshaft box unit 12 driven by the engine, a clutch unit 13 disposed in proximity to the crankshaft box unit 12, and a transmission box unit 14 disposed in proximity to the clutch unit 13.

The crankshaft box unit 12 includes a crankshaft box 121, a crankshaft 122 disposed in the crankshaft box 121 and rotatable by the engine, a driven shaft 123 having two ends connected respectively and pivotally to the crankshaft 122 and a transmission box 140 of the transmission box unit 14, a first bearing 124 disposed between the transmission box 140 and the driven shaft 123, and a self-lubricating bearing 125 sleeved on the driven shaft 123. The crankshaft 122 has two oil passages 126 that permit flow of lubricating oil therethrough.

The clutch unit 13 includes a seal cover 131 cooperating with the crankshaft box 121 of the crankshaft box unit 12 to define a clutch chamber 130, a wet clutch 132 sleeved on and rotatable with the crankshaft 122, an outer shield 133 sleeved on the crankshaft 122 for covering the wet clutch 132, a sleeve body 134 disposed between the driven shaft 123 and the outer sleeve 133 and connected fixedly to the outer shield 133 by a plurality of rivets 137 (only two are shown), a second bearing 135 disposed between the sleeve body 134 and the crankshaft 122, and a unidirectional clutch 136 for controlling unidirectional rotation of the wet clutch 132 and lubricated by the lubricating oil flowing from the oil passages 126 in the crankshaft 122. The driven shaft 123 extends through the seal cover 131, and is coupled with the sleeve body 134. When the rotational speed of the wet clutch 132 reaches a predetermined speed, the wet clutch 132 comes into frictional contact with the outer shield 133 so as to rotate an assembly of the outer shield 133, the sleeve body 134, and the driven shaft 123.

The transmission box unit 14 includes a driving pulley unit 141 sleeved on the driven shaft 123, a coupling shaft (not shown) connected fixedly to the rear wheel, a driven pulley unit (not shown) sleeved on the coupling shaft, and a V-belt 143 trained on the driving pulley unit 141 and the driven pulley unit so as to transfer rotation of the driving pulley unit 141 to the driven pulley unit. When the driven shaft 123 rotates at a speed smaller than a threshold speed, the pitch diameter of the driving pulley unit 141 is smaller than that of the driven pulley unit. In this state, the rotational speed of the rear wheel is lower than that of the driven shaft 123. When the driven shaft 123 rotates at a speed greater than the threshold speed, the pitch diameter of the driving pulley unit 141 is greater than that of the driven pulley unit. In this state, the rotational speed of the rear wheel is greater than that of the driven shaft 123.

When the engine is in an idle speed condition, although the crankshaft 122 and the wet clutch 132 rotate, the wet clutch 132 is spaced apart from the outer shield 133. As such, power cannot be transmitted from crankshaft 122 to the driven shaft 123 and, thus, the rear wheel. When a throttle is operated to increase the rotational speed of the crankshaft 122 and the wet clutch 132, the wet clutch 132 engages the outer shield 133 so as to allow for transmission of power from the crankshaft 122 to the driven shaft 123. When the engine is in an acceleration condition, the pitch diameter of the driving pulley unit 141 increases, while the pitch diameter of the driven pulley unit is reduced, thereby resulting in an increase in the rotational speed of the rear wheel. When the engine is in a deceleration condition, the pitch diameter of the driving pulley unit 141 reduces, while the pitch diameter of the driven pulley unit is increased, thereby resulting in a decrease in the rotational speed of the rear wheel.

The aforesaid conventional vehicle transmission 1 suffers from the following disadvantages:
(1) Since the crankshaft 122 and the driven shaft 123 are coupled to each other at a position between the wet clutch 132 and the outer shield 133, many elements need to cooperate with the crankshaft 122, the driven shaft 123, the wet clutch 132, and the outer shield 133 in a highly precise manner. This results in difficulties with respect to assembly of these elements.
(2) The lubricating oil flows onto the unidirectional clutch 136 and other rotating parts through the oil passages 126 in the crankshaft 122. However, a space between the unidirectional clutch 136 and the sleeve body 134 is too small to be filled with sufficient lubricating oil. This results in unsmooth rotation of the unidirectional clutch 136.

The object of this invention is to provide a vehicle transmission that can be assembled easily and that has a lubricating arrangement capable of providing sufficient lubrication to a unidirectional clutch.

This object is achieved by a vehicle transmission according to claim 1. Claims 2-9 concern particular embodiments of the invention of claim 1.

Since the oil-storing end portion of the driven shaft extends into the seal cover, and defines the lubricating space for receiving the unidirectional clutch, and since the unidirectional clutch is disposed outwardly of the seal cover, the unidirectional clutch can be lubricated efficiently so as to allow for smooth rotation of the unidirectional clutch.

These and other features and advantages of the vehicle transmission of claim 1will become apparent in the following detailed description of the preferred embodiments of this invention, with reference to the accompanying drawings, in which:
Fig. 1 is a fragmentary sectional view of a conventional vehicle transmission;
Fig. 2 is a schematic view of the first preferred embodiment of a vehicle transmission according to this invention;
Fig. 3 is a fragmentary sectional view of the first preferred embodiment, illustrating flow paths of lubricating oil; and
Fig. 4 is a fragmentary schematic view of the second preferred embodiment of a vehicle transmission according to this invention.

Before the present invention is described in greater detail in connection with the preferred embodiments, it should be noted that similar elements and structures are designated by like reference numerals throughout the entire disclosure.

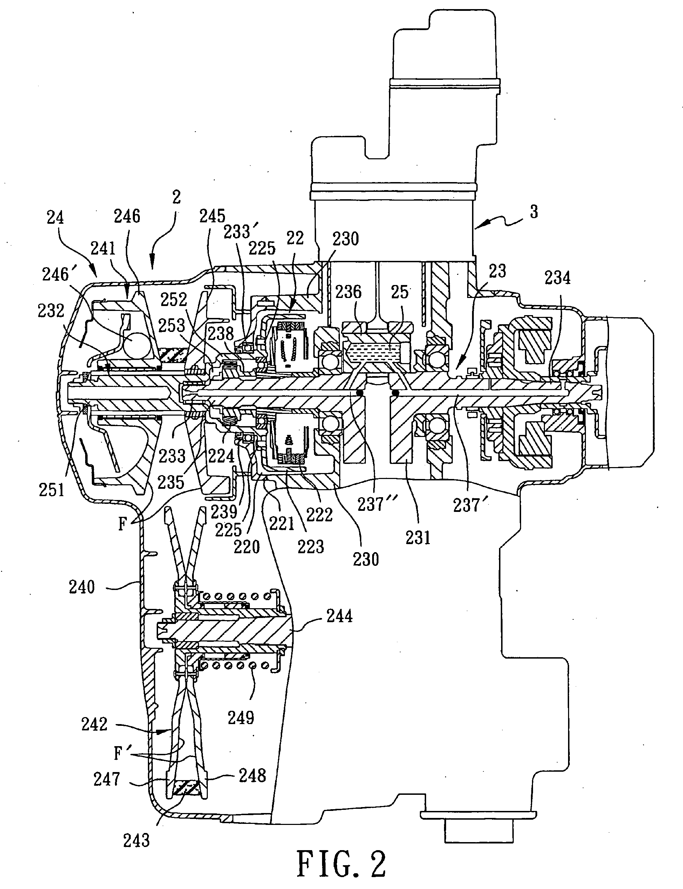

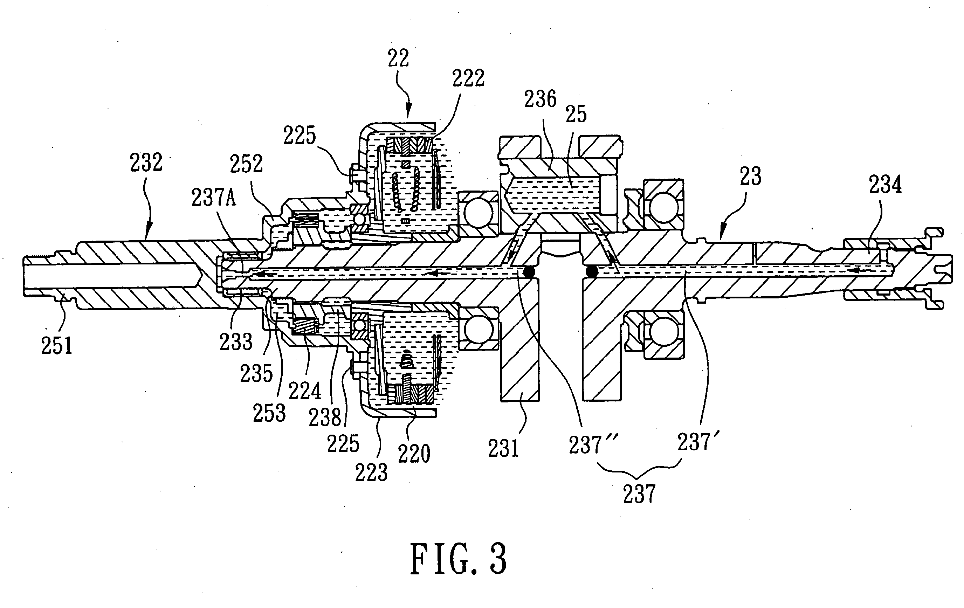

Referring to Figs. 2 and 3, the first preferred embodiment of a vehicle transmission 2 according to this invention is suitable for a scooter, an all-terrain vehicle, etc., and is adapted for transmitting power from an engine 3 to a rear wheel (not shown).

The vehicle transmission 2 includes a clutch unit 22, a crankshaft box unit 23, a transmission box unit 24, and lubricating oil 25 disposed in the clutch unit 22 and the crankshaft box unit 23. Power can be transmitted from the engine 3 to the transmission box unit 24 via the crankshaft box unit 23 and the clutch unit 22 so as to rotate the rear wheel.

The clutch unit 22 is disposed in proximity to the crankshaft box unit 23, and includes a seal cover 221, a wet clutch 222, a bowl-shaped outer shield 223, and a unidirectional clutch 224. The seal cover 221 cooperates with the crankshaft box unit 23 to define a clutch chamber 220 therebetween. The wet clutch 222 is disposed within the clutch chamber 220, and is rotatable with the crankshaft 231 of the crankshaft box unit 23 in a known manner. The outer shield 223 is disposed in the clutch chamber 220, and has a central portion connected fixedly to the driven shaft 232 by rivets 225 (only two are shown), and an annular outer periphery disposed around the wet clutch 221 in a known manner. The unidirectional clutch 224 is used to control unidirectional rotation of the wet clutch 222.

The crankshaft box unit 23 further includes a crankshaft box 230, a driven shaft 232, a first bearing 233, a second bearing 233', a bushing 238, and an annular oil seal 239. The crankshaft 231 is journalled within the crankshaft box 230, and is rotatable by the engine 3. The driven shaft 232 is disposed in the transmission box unit 24, and extends through the seal cover 221. The crankshaft 231 is inserted into the driven shaft 232. The first bearing 233 is disposed between the crankshaft 231 and the driven shaft 232. The second bearing 233' is disposed between the driven shaft 232 and the seal cover 221. The unidirectional clutch 224 is located between the first and second bearings 233, 233'. The seal cover 221, the wet clutch 222, the outer shield 223, and the bushing 238 are sleeved on the crankshaft 231. In this embodiment, the first bearing 233 is configured as a roller bearing, and the second bearing 233' is configured as a ball bearing.

The driven shaft 232 has a positioning end portion 251 disposed rotatably in the transmission box unit 24, and an oil-storing end portion 252 that extends into the seal cover 221 and that is connected fixedly to the outer shield 223 by the rivets 225. The second bearing 233' is disposed between an inner surface of the seal cover 221 and an outer surface of the oil-storing end portion 252 of the driven shaft 232. The oil seal 239 is sleeved on the oil-storing end portion 252 of the driven shaft 232, and is clamped between the oil-storing end portion 252 of the driven shaft 232 and the seal cover 221. The oil-storing end portion 252 defines a lubricating space 253 that receives the unidirectional clutch 224 and the bushing 238, that is filled with the lubricating oil 25, and that is in fluid communication with the clutch chamber 220. The oil seal 239 is disposed in proximity to the second bearing 233' for preventing leakage of the lubricating oil 25 from the lubricating space 253 via the second bearing 233'. The unidirectional clutch 224 is disposed outwardly of the seal cover 221.

The crankshaft 231 extends through the seal cover 221, and has an open oil inlet end 234 and an open insertion end portion 235 opposite to the oil inlet end 234, a hollow conduit member 236, and an axial central passage unit 237. The insertion end portion 235 extends through the seal cover 221. The first bearing 233 is disposed between an outer surface of the insertion end portion 235 of the crankshaft 231 and an inner surface of the oil-storing end portion 252 of the driven shaft 232. The oil-storing end portion 252 is sleeved coaxially on the insertion end portion 235 of the crankshaft 231. The central passage unit 237 has an upstream passage portion 237' permitting flow of the lubricating oil 25 therethrough when the lubricating oil 25 is fed into the oil inlet end 234 of the crankshaft 231, and a downstream passage portion 237" spaced apart from and aligned with the upstream passage portion 237'. The conduit member 236 defines an elongated interior chamber, which is parallel to the upstream and downstream passage portions 237', 237" of the central passage unit 237 and which is communicated with the upstream and downstream passage portions 237' , 237" so as to allow for flow of the lubricating oil 25 from the upstream passage portion 237' into the downstream passage portion 237" via the interior chamber in the conduit member 236.

The downstream passage portion 237" has a bearing-insertion end portion (237A) that forms a portion of the insertion end portion 235 of the crankshaft 231 and that is communicated with the first bearing 233. The bearing-insertion end portion (237A) has a diameter smaller than that of the remaining portion of the downstream passage portion 237" so as to throttle the flow rate of the lubricating oil 25 when flowing from the central passage unit 237 onto the first bearing 233. Alternatively, the diameter of the bearing-insertion end portion (237A) is the same as that of the remaining portion of the downstream passage portion 237", and a throttle valve is disposed within the bearing-insertion end portion (237A) for performing the same function of throttling the flow rate of the lubricating oil 25.

When the lubricating oil 25 is fed into the oil inlet end 234 of the crankshaft 231, it flows from the upstream passage portion 237' of the central passage unit 237 into the downstream passage portion 237" of the central passage unit 237 via the conduit member 236. Subsequently, the lubricating oil 25 flows from the downstream passage portion 237" into the lubricating space 253 and, thus, the clutch chamber 220 via the bearing-insertion end portion (237A) so as to lubricate the wet clutch 222, the unidirectional clutch 224, and the first and second bearings 233, 233'.

The transmission box unit 24 is disposed in proximity to the clutch unit 22, and includes a transmission box 240, a driving pulley unit 241, a driven pulley unit 242, a V-belt 243, and a coupling shaft 244. The insertion end portion 235 of the crankshaft 231 extends into the transmission box 240. The driving pulley unit 241 is disposed in the transmission box 240, and includes a fixed driving pulley half 245 sleeved fixedly on the driven shaft 232 and adjacent to the crankshaft box unit 23, and a movable driving pulley half 246 sleeved movably on the driven shaft 232 and disposed between the fixed driving pulley half 245 and a wall of the transmission box 240 in a known manner. In this embodiment, the crankshaft 231 extends through the fixed driving pulley half 245. When the rotational speed of the driven shaft 232 increases, a ball unit 246' moves outwardly (i.e., away from the driven shaft 232) by centrifugal force so as to move the movable driving pulley half 246 toward the fixed driving pulley half 245 in a known manner. This increases the pitch diameter of the driving pulley unit 241. When the rotational speed of the driven shaft 232 reduces, the movable driving pulley half 246 moves away from the fixed driving pulley half 245. This reduces the pitch diameter of the driving pulley unit 241. The fixed and movable driving pulley halves 245, 246 are formed with juxtaposed frusto-conical surfaces (F) facing each other in a known manner.

The coupling shaft 244 is journalled in the transmission box 240 under the driven shaft 232, and is connected fixedly to the rear wheel. The driven pulley unit 242 is also disposed in the transmission box 240, and includes a fixed driven pulley half 247 sleeved fixedly on the coupling shaft 244, a movable driven pulley half 248 sleeved movably on the coupling shaft 244, and a coiled compression spring 249 for biasing the movable driven pulley half 248 toward the fixed driven pulley half 247. The fixed and movable driven pulley halves 247, 248 are formed with juxtaposed frusto-conical surfaces (F') facing each other. The V-belt 243 is trained on the driving and driven pulley units 241, 242, and extends between the juxtaposed frusto-conical surfaces (F, F') of the fixed and movable driving pulley halves 245, 246, and of the fixed and movable driven pulley halves 247, 248. As such, rotation of the driving pulley unit 241 and the driven shaft 232 can be transferred to the driven pulley unit 242 and the coupling shaft 244. Operation of the transmission box unit 24 is similar to that of the aforesaid conventional vehicle transmission 1 (see Fig. 1), and will not be described in detail.

The vehicle transmission 2 of this invention has the following advantages:
(1) Because the crankshaft 231 extends through the seal cover 221, the insertion end portion 235 of the crankshaft 231 can be mounted easily to the driven shaft 232. As a consequence, the vehicle transmission 2 can be assembled easily.
(2) The lubricating oil 25 is fed into the oil inlet end 234 of the central passage 237, and flows in the clutch unit 22 and the crankshaft box unit 23 along the flow paths indicated by the arrows in Fig. 3, thereby providing sufficient lubrication to rotating parts. In particular, since the unidirectional clutch 224 is disposed within the oil-storing end portion 252 of the driven shaft 232, and outwardly of the seal cover 221, an enhanced lubricating effect thereto and, thus, smooth rotation thereof are achieved.

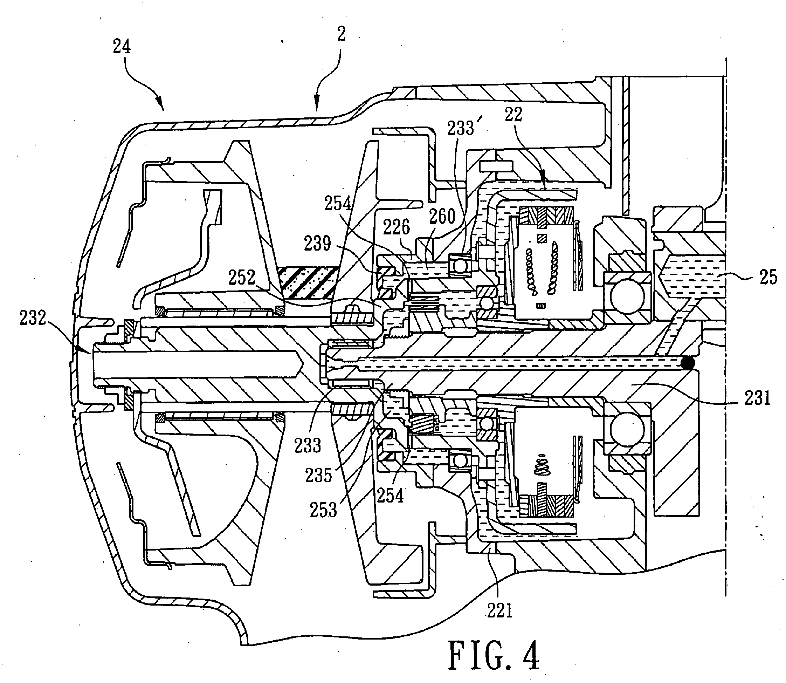

Fig. 4 shows the second preferred embodiment of a vehicle transmission 2 according to this invention, which is similar in construction to the first preferred embodiment. In this embodiment, the clutch unit 22 further includes a tubular oil seal seat 226 connected fixedly to the seal cover 221 and extending toward the transmission box unit 24. The oil seal 239 is sleeved on the oil-storing end portion 252 of the driven shaft 232, and is clamped between the oil-storing end portion 252 of the driven shaft 232 and the oil seal seat 226. As such, an oil chamber 260 is defined among the oil-storing end portion 252 of the driven shaft 232, the oil seal seat 226, the oil seal 239, and the second bearing 233'. The oil-storing end portion 252 of the driven shaft 232 has a wall formed with two through holes 254 in communication with the lubricating space 253 and the oil chamber 260. This allows the lubricating oil 25 to flow from the lubricating space 253 into the oil chamber 260 via the through holes 254 for lubricating the second bearing 233'. This further improves the lubricating effect to thereby increase the service life of the vehicle transmission. Furthermore, due to the presence of the oil seal seat 226, the diameter of the oil seal 239 can be reduced slightly. When the diameter of the oil seal 239 is reduced, the deformation of the same is also reduced during operation.

## Claims

1. A vehicle transmission (2) comprising:
a crankshaft box unit (23) including a crankshaft box (230) and a crankshaft (231) journalled within the crankshaft box (230);
a clutch unit (22) disposed in proximity to the crankshaft box unit (23) and including a seal cover (221) cooperating with the crankshaft box (230) to define a clutch chamber (220) therebetween, a wet clutch (222) disposed within the clutch chamber (220) and rotatable with the crankshaft (231), and a unidirectional clutch (224) for controlling unidirectional rotation of the wet clutch (222);
a transmission box unit (24) disposed in proximity to the clutch unit (22); and
lubricating oil (25) disposed in the clutch unit (22) and the crankshaft box unit (23);
the crankshaft (231) of the crankshaft box unit (23) extending through the seal cover (221) of the clutch unit (22) and having an insertion end portion (235) extending into the transmission box unit (24), the crankshaft box unit (23) further including a driven shaft (232) disposed in the transmission box unit (24) and having an oil-storing end portion (252) that is sleeved coaxially on the insertion end portion (235) of the crankshaft (231) and that extends into the seal cover (221), the oil-storing end portion (252) defining a lubricating space (253) that receives the unidirectional clutch (224) and that is filled with the lubricating oil (25), the unidirectional clutch (224) being disposed outwardly of the seal cover (221); **characterised in that:**
the clutch unit (22) further includes a tubular oil seal seat (226) connected fixedly to the seal cover (221) and extending toward the transmission box unit (24); and
the crankshaft box unit (23) further includes a first bearing (233) disposed between an outer surface of the insertion end portion (235) of the crankshaft (231) and an inner surface of the oil-storing end portion (252) of the driven shaft (232), a second bearing (233') disposed between an inner surface of the seal cover (221) and an outer surface of the oil-storing end portion (252) of the driven shaft (232), and an annular oil seal (239) sleeved on the oil-storing end portion (252) of the driven shaft (232) and clamped between the oil-storing end portion (252) of the driven shaft (232) and the oil seal seat (226) so as to define an oil chamber (260) among the oil-storing end portion (252) of the driven shaft (232), the oil seal seat (226), the oil seal (239), and the second bearing (233'), the unidirectional clutch (224) being located between the first and second bearings (233, 233').

2. A vehicle transmission (2) as claimed in Claim 1, wherein the oil-storing end portion (252) of the driven shaft (232) has a wall formed with a through hole (254) in fluid communication with the lubricating space (253) and the oil chamber (260).

3. A vehicle transmission (2) as claimed in Claim 1, wherein the crankshaft box unit (23) further includes a bushing (238) sleeved on the insertion end portion (235) of the crankshaft (231), the unidirectional clutch (224) being sleeved on the bushing (238).

4. A vehicle transmission (2) as claimed in any one of claims 1 to 3, wherein the first bearing (233) of the crankshaft box unit (23) is configured as a roller bearing.

5. A vehicle transmission (2) as claimed in any one of claims 1 to 4, wherein the clutch unit (22) further includes an outer shield (223) disposed in the clutch chamber (220) and having an annular outer periphery disposed around the wet clutch (222), the outer shield (223) being connected fixedly to the driven shaft (232).

6. A vehicle transmission (2) as claimed in any one of claims 1 to 5, wherein the transmission box unit (24) comprises:
a transmission box (240);
a driving pulley unit (241) disposed in the transmission box (240) and rotatable by the crankshaft (231), the driving pulley unit (241) including a fixed driving pulley half (245) sleeved fixedly on the driven shaft (232), and a movable driving pulley half (246) sleeved movably on the driven shaft (232), the movable driving pulley half (246) being movable toward the fixed driving pulley half (245) when a rotational speed of the driven shaft (232) increases, the movable driving pulley half (246) being movable away from the fixed driving pulley half (245) when the rotational speed of the driven shaft (232) reduces, the fixed and movable driving pulley halves (245, 246) having juxtaposed frusto-conical surfaces (F) facing each other;
a coupling shaft (244) journalled in the transmission box (240);
a driven pulley unit (242) disposed in the transmission box (240) and including a fixed driven pulley half (247) sleeved fixedly on the coupling shaft (244), and a movable driven pulley half (248) sleeved movably on the coupling shaft (244), the fixed and movable driven pulley halves (247, 248) having juxtaposed frusto-conical surfaces (F') facing toward each other;
a V-belt (243) trained on the driving and driven pulley units (241, 242) and extending between the juxtaposed frusto-conical surfaces (F, F') of the fixed and movable driving pulley halves (245, 246) and of the fixed and movable driven pulley halves (247, 248) so as to transfer rotation of the driving pulley unit (241) to the driven pulley unit (242); and
a spring (249) for biasing the movable driven pulley half (248) toward the fixed driven pulley half (247).

7. A vehicle transmission (2) as claimed in Claim 6, wherein the insertion end portion (235) of the crankshaft (231) of the crankshaft box unit (23) extends through the fixed driving pulley half (245) of the driving pulley unit (241) of the transmission box unit (24).

8. A vehicle transmission (2) as claimed in any one of claims 1 to 7, wherein the crankshaft (231) includes:
an axial central passage unit (237) having an upstream passage portion (237') permitting flow of the lubricating oil (25) therethrough when the lubricating oil (25) is fed into the crankshaft (231), and a downstream passage portion (237") spaced apart from and aligned with the upstream passage portion (237') and having a bearing-insertion end portion (237A) that forms a portion of the insertion end portion (235) of the crankshaft (231) and that is communicated with the lubricating space (253) in the oil-storing end portion (252) of the driven shaft (232) of the crankshaft box unit (23); and
a hollow conduit member (236) defining an elongated interior chamber that is parallel to the upstream and downstream passage portions (237, 237") of the central passage unit (237) and that is communicated with the upstream and downstream passage portions (237, 237") of the central passage unit (237) so as to allow for flow of the lubricating oil (25) from the upstream passage portion (237') into the downstream passage portion (237") via the interior chamber in the conduit member (236).

9. A vehicle transmission (2) as claimed in Claim 8, wherein the bearing-insertion end portion (237A) of the downstream passage portion (237") of the central passage unit (237) in the crankshaft (231) has a diameter that is smaller than that of the remaining portion of the downstream passage portion (237") so as to throttle a flow rate of the lubricating oil (25) when flowing from the central passage unit (237) into the lubricating space (253) in the oil-storing end portion (252) of the driven shaft (232).

## Patentansprüche

1. Fahrzeuggetriebe (2) mit:
einer Kurbelwellengehäuseeinheit (23) mit einem Kurbelwellengehäuse (230) und einer Kurbelwelle (231), die innerhalb des Kurbelwellengehäuses (231) gelagert ist;
einer Kupplungseinheit (22), die in der Kurbelwellengehäuseeinheit (23) angeordnet ist und eine Dichtabdeckung (221) umfasst, die mit dem Kurbelwellengehäuse (230) zusammenwirkt, um eine Kupplungskammer (220) dazwischen zu definieren, mit einer Nasskupplung (222), die innerhalb der Kupplungskammer (220) angeordnet und mit der Kurbelwelle (231) rotierbar ist, und mit einer unidirektionalen Kupplung (224) zur Steuerung der unidirektionalen Rotation der Nasskupplung (222);
einer Getriebeboxeinheit (24), die in der Nähe der Kupplungseinheit (22) angeordnet ist; und mit
Schmieröl (25), das in der Kupplungseinheit (22) und der Kurbelwellengehäuseeinheit (23) angeordnet ist;
wobei die Kurbelwelle (231) der Kurbelwellengehäuseeinheit (23) sich durch die Dichtabdeckung (221) der Kupplungseinheit (22) erstreckt und einen Einsatzendabschnitt (235) aufweist, der sich in die Getriebegehäuseeinheit (24) erstreckt, wobei die Kurbelwellengehäuseeinheit (23) weiterhin eine angetriebene Welle (232) umfasst, die in der Getriebegehäuseeinheit (24) angeordnet ist und einen öllagernden Endabschnitt (252) aufweist, der koaxial auf den Einsatzendabschnitt (235) der Kurbelwelle (231) aufgesteckt ist und sich in die Dichtabdeckung (221) erstreckt, wobei der öllagernde Endabschnitt (252) einen Schmierbereich (253) definiert, der die unidirektionale Kupplung (224) aufnimmt und mit Schmieröl (25) gefüllt ist, wobei die unidirektionale Kupplung (224) außerhalb der Dichtabdeckung (221) angeordnet ist; **dadurch gekennzeichnet, dass:**
die Kupplungseinheit (22) weiterhin einen tubularen Öldichtsitz (226) umfasst, der starr mit der Dichtabdeckung (221) verbunden ist und sich in Richtung der Getriebegehäuseeinheit (24) erstreckt; und
die Kurbelwellengehäuseeinheit (23) weiterhin ein erstes Lager (233), das zwischen einer Außenfläche des Einsatzendabschnitts (235) der Kurbelwelle (231) und einer Innenfläche des öllagernden Endabschnitts (252) der angetriebenen Welle (232) angeordnet ist, ein zweites Lager (233'), das zwischen einer Innenfläche der Dichtabdeckung (221) und einer Außenfläche des öllagernden Endabschnitts (252) der angetriebenen Welle (232) angeordnet ist, und eine ringförmige Öldichtung (239) aufweist, die auf den öllagernden Endabschnitt (252) der angetriebenen Welle (232) aufgesteckt ist und zwischen dem öllagernden Endabschnitt (252) der angetriebenen Welle (232) und dem Öldichtsitz (226) eingespannt ist, um eine Ölkammer (260) zwischen dem öllagernden Endabschnitt (252) der angetriebenen Welle (232), dem Öldichtsitz (226), der Öldichtung (239), und dem zweiten Lager (233') zu definieren, wobei die unidirektionale Kupplung (224) zwischen den ersten und den zweiten Lagern (233, 233') angeordnet ist.

2. Fahrzeuggetriebe (2) nach Anspruch 1, bei dem der öllagemde Endabschnitt (252) der angetriebenen Welle (232) eine Wand aufweist, die darin eine Durchgangsbohrung (254) ausgebildet hat, die in Strömungsverbindung mit dem Schmierbereich (253) und der Ölkammer (260) steht.

3. Fahrzeuggetriebe (2) nach Anspruch 1, bei dem die Kurbelwellengehäuseeinheit (23) weiterhin eine Buchse (238) umfasst, die auf den Einsatzendabschnitt (235) der Kurbelwelle (231) aufgesteckt ist, wobei die unidirektionale Kupplung (224) auf die Buchse (238) aufgesteckt ist.

4. Fahrzeuggetriebe (2) nach einem der Ansprüche 1-3, bei dem das erste Lager (233) der Kurbelwellengehäuseeinheit (23) als Wälzlager ausgebildet ist.

5. Fahrzeuggetriebe (2) nach einem der Ansprüche 1-4, wobei die Kupplungseinheit (22) weiterhin eine äußere Abschirmung (223) umfasst, die in der Kupplungskammer (220) angeordnet ist und einen äußeren ringförmigen Umfang aufweist, der um die Nasskupplung (222) angeordnet ist, wobei die äußere Abschirmung (223) starr mit der angetriebenen Welle (232) verbunden ist.

6. Fahrzeuggetriebe (2) nach einem der Ansprüche 1-5, bei dem die Getriebegehäuseeinheit (24) umfasst:
ein Getriebegehäuse (240);
eine Antriebsscheibeneinheit (241), die in dem Getriebegehäuse (240) angeordnet und von der Kurbelwelle (231) rotierbar ist, wobei die Antriebsscheibeneinheit (241) eine fixierte Antriebsscheibenhälfte (245), die starr auf die angetriebene Welle (232) aufgesteckt ist, und eine bewegbare Antriebsscheibenhälfte (246) umfasst, die bewegbar auf die angetriebene Welle (232) aufgesteckt ist, wobei die bewegbare Antriebsscheibenhälfte (246) in Richtung der fixierten Antriebsscheibenhälfte (245) bewegbar ist, wenn eine Rotationsgeschwindigkeit der angetriebenen Welle (232) ansteigt, und wobei die bewegbare Antriebsscheibenhälfte (246) von der fixierten Antriebsscheibenhälfte (245) weg bewegbar ist, wenn die Rotationsgeschwindigkeit der angetriebenen Welle (232) sich reduziert, wobei die fixierten und bewegbaren Antriebsscheibenhälften (245, 246) nebeneinander liegende kegelstumpfförmige Flächen (F) aufweisen, die einander zugewandt sind;
eine Kupplungswelle (244), die in dem Getriebegehäuse (240) gelagert ist;
eine Abtriebsscheibeneinheit (242), die in dem Getriebegehäuse (240) angeordnet ist und eine fixierte Abtriebsscheibenhälfte (247), die starr auf die Kupplungswelle (244) aufgesteckt ist, und eine bewegbare Abtriebsscheibenhälfte (248) umfasst, die bewegbar auf die Kupplungswelle (244) aufgesteckt ist, wobei die fixierten und bewegbaren Abtriebsscheibenhälften (247, 248) nebeneinander liegende kegelstumpfförmige Flächen (F') aufweisen, die einander zugewandt sind;
einen Keilriemen (243), der auf den Antriebs- und Abtriebsscheibeneinheiten (241, 242) geführt ist und sich zwischen den nebeneinander liegenden kegelstumpfförmigen Flächen (F, F') der fixierten und bewegbaren Antriebsscheibenhälften (245, 246) und den fixierten und bewegbaren Abtriebsscheibenhälften (247, 248) erstreckt, um die Rotation von der Antriebsscheibeneinheit (241) auf die Abtriebsscheibeneinheit (242) zu übertragen; und
eine Feder (249), um die bewegbare Antriebsscheibenhälfte (248) in Richtung der fixierten Abtriebsscheibenhälfte (247) vorzuspannen.

7. Fahrzeuggetriebe (2) nach Anspruch 6, bei dem der Einsatzendabschnitt (235) der Kurbelwelle (231) sich durch die fixierte Antriebsscheibenhälfte (245) der Antriebsscheibeneinheit (241) der Getriebegehäuseeinheit (24) erstreckt.

8. Fahrzeuggetriebe (2) nach einem der Ansprüche 1-7, wobei die Kurbelwelle (231) umfasst:
eine axiale zentrale Kanaleinheit (237) mit einem stromaufwärts gelegenen Kanalabschnitt (237'), der einen Fluss von Schmieröl (25) durch sich zulässt, wenn das Schmieröl (25) in die Kurbelwelle (231) zugeführt wird, und mit einem stromabwärts gelegenen Kanalabschnitt (237"), der von dem stromaufwärts gelegenen Kanalabschnitt (237') beabstandet und darauf ausgerichtet ist, und mit einem Lagereinsatzendabschnitt (237A), der einen Abschnitt des Einsatzendabschnitts (235) der Kurbelwelle (231) bildet und der mit dem Schmierbereich (253) in dem öllagernden Endabschnitt (252) der angetriebenen Welle (232) der Kurbelwellengehäuseeinheit (23) in Verbindung steht; und
ein hohles Rohrleitungselement (236), das eine längliche innere Kammer definiert, die parallel zu den stromaufwärts und stromabwärts gelegenen Kanalabschnitten (237', 237") der zentralen Kanaleinheit (237) liegt und die mit den stromaufwärts und stromabwärts gelegenen Kanalabschnitten (237', 237") der zentralen Kanaleinheit (237) verbunden ist, um einen Fluss von Schmieröl (25) von dem stromaufwärts gelegenen Kanalabschnitt (237') in den stromabwärts gelegenen Kanalabschnitt (237") über die innere Kammer in dem Rohrleitungselement (236) zu erlauben.

9. Fahrzeuggetriebe (2) nach Anspruch 8, bei dem der Lagereinsatzendabschnitt (237A) des stromabwärts gelegenen Kanalabschnitts (237") der zentralen Kanaleinheit (237) in der Kurbelwelle (231) einen Durchmesser aufweist, der kleiner ist als der des verbleibenden Abschnitts des stromabwärts gelegenen Kanalabschnitts (237"), um den Durchfluss des Schmieröls (25) zu drosseln, wenn es von der zentralen Kanaleinheit (237) in den Schmierbereich (253) in dem öllagernden Endabschnitt (252) der angetriebenen Welle fließt.

## Revendications

1. Transmission de véhicule (2) comprenant:
une unité de carter de vilebrequin (23) contenant un carter de vilebrequin (230) et un vilebrequin (231) monté sur paliers dans celui-ci;
une unité d'embrayage (22) disposée à proximité de l'unité de carter de vilebrequin (23) et contenant un couvercle de joint (221) qui coopère avec le carter de vilebrequin (230) pour définir une chambre d'embrayage (220) entre les deux, un embrayage à bain d'huile (222) disposé dans la chambre d'embrayage (220) et apte à tourner avec le vilebrequin (231), et un embrayage unidirectionnel (224) pour commander la rotation unidirectionnelle de l'embrayage à bain d'huile (222) ;
une unité de boîte de transmission (24) disposée à proximité de l'unité d'embrayage (22) ; et
de l'huile de lubrification (25) disposée dans l'unité d'embrayage (22) et dans l'unité de carter de vilebrequin (23) ;
le vilebrequin (231) de l'unité de carter de vilebrequin (23) traversant le couvercle de joint (221) de l'unité d'embrayage (22) et ayant une partie d'extrémité d'introduction (235) qui entre dans l'unité de boîte de transmission (24), l'unité de carter de vilebrequin (23) comprenant par ailleurs un arbre entraîné (232) qui est disposé dans l'unité de boîte de transmission (24) et qui présente une partie d'extrémité de stockage d'huile (252) enfilée coaxialement sur la partie d'extrémité d'introduction (235) du vilebrequin (231) et entrant dans le couvercle de joint (221), ladite partie d'extrémité de stockage d'huile (252) définissant un espace de lubrification (253) qui reçoit l'embrayage unidirectionnel (224) et qui est rempli avec l'huile de lubrification (25), l'embrayage unidirectionnel (224) étant disposé vers l'extérieur du couvercle de joint (221) ;
**caractérisée en ce que** l'unité d'embrayage (22) comprend par ailleurs un support de joint d'huile tubulaire (226) qui est relié de manière fixe au couvercle de joint (221) et qui s'étend vers l'unité de boîte de transmission (24) ; et
l'unité de carter de vilebrequin (23) comprend par ailleurs un premier palier (233) disposé entre une surface extérieure de la partie d'extrémité d'introduction (235) du vilebrequin (231) et une surface intérieure de la partie d'extrémité de stockage d'huile (252) de l'arbre entraîné (232), un deuxième palier (233') disposé entre une surface intérieure du couvercle de joint (221) et une surface extérieure de la partie d'extrémité de stockage d'huile (252) de l'arbre entraîné (232), et un joint d'huile annulaire (239) enfilé sur la partie d'extrémité de stockage d'huile (252) de l'arbre entraîné (232) et serré entre la partie d'extrémité de stockage d'huile (252) de l'arbre entraîné (232) et le support de joint d'huile (226) de manière à définir une chambre d'huile (260) entre ladite partie d'extrémité de stockage d'huile (252) de l'arbre entraîné (232), le support de joint d'huile (226), le joint d'huile (239) et le deuxième palier (233'), l'embrayage unidirectionnel (224) étant situé entre les premier et deuxième paliers (233, 233').

2. Transmission de véhicule (2) telle que revendiquée dans la revendication 1, dans laquelle la partie d'extrémité de stockage d'huile (252) de l'arbre entraîné (232) a une paroi pourvue d'un trou traversant (254) qui est en communication fluidique avec l'espace de lubrification (253) et la chambre d'huile (260).

3. Transmission de véhicule (2) telle que revendiquée dans la revendication 1, dans laquelle l'unité de carter de vilebrequin (23) comprend par ailleurs un manchon (238) enfilé sur la partie d'extrémité d'introduction (235) du vilebrequin (231), l'embrayage unidirectionnel (224) étant enfilé sur le manchon (238).

4. Transmission de véhicule (2) telle que revendiquée dans l'une quelconque des revendications 1 à 3, dans laquelle le premier palier (233) de l'unité de carter de vilebrequin (23) est conçu comme un palier à rouleaux.

5. Transmission de véhicule (2) telle que revendiquée dans l'une quelconque des revendications 1 à 4, dans laquelle l'unité d'embrayage (22) comprend par ailleurs une plaque de protection extérieure (223) qui est disposée dans la chambre d'embrayage (220) et qui a une périphérie extérieure annulaire disposée autour de l'embrayage à bain d'huile (222), la plaque de protection (223) étant reliée de manière fixe à l'arbre entraîné (232).

6. Transmission de véhicule (2) telle que revendiquée dans l'une quelconque des revendications 1 à 5, dans laquelle l'unité de boîte de transmission (24) comprend :
une boîte de transmission (240) ;
une unité de poulie d'entraînement (241) disposée dans la boîte de transmission (240) et apte à tourner grâce au vilebrequin (231), l'unité de poulie d'entraînement (241) comprenant une moitié de poulie d'entraînement fixe (245) enfilée de manière fixe sur l'arbre entraîné (232), et une moitié de poulie d'entraînement mobile (246) enfilée de manière mobile sur l'arbre entraîné (232), la moitié de poulie d'entraînement mobile (246) étant mobile en direction de la moitié de poulie d'entraînement fixe (245) quand une vitesse de rotation de l'arbre entraîné (232) augmente, et à l'opposé de la moitié fixe (245) quand la vitesse de rotation de l'arbre entraîné (232) diminue, les moitiés de poulie d'entraînement fixe et mobile (245, 246) ayant des surfaces tronconiques (F) juxtaposées qui se font face ;
un arbre d'accouplement (244) monté sur palier dans la boîte de transmission (240) ;
une unité de poulie entraînée (242) disposée dans la boîte de transmission (240) et contenant une moitié de poulie entraînée fixe (247) enfilée de manière fixe sur l'arbre d'accouplement (244), et une moitié de poulie entraînée mobile (248) enfilée de manière mobile sur l'arbre d'accouplement (244), les moitiés de poulie entraînée fixe et mobile (247, 248) ayant des surfaces tronconiques (F') juxtaposées qui se font face ;
une courroie trapézoïdale (243) qui passe sur la poulie d'entraînement et sur la poulie entraînée (241, 242) et qui s'étend entre les surfaces tronconiques juxtaposées (F, F') des moitiés de poulie d'entraînement fixe et mobile (245, 246) et des moitiés de poulie entraînée fixe et mobile (247, 248) de manière à transmettre la rotation de l'unité de poulie d'entraînement (241) à l'unité de poulie entraînée (242) ; et
un ressort (249) pour contraindre la moitié de poulie entraînée mobile (248) vers la moitié de poulie entraînée fixe (247).

7. Transmission de véhicule (2) telle que revendiquée dans la revendication 6, dans laquelle la partie d'extrémité d'introduction (235) du vilebrequin (231) de l'unité de carter de vilebrequin (23) traverse la moitié de poulie d'entraînement fixe (245) de l'unité de poulie d'entraînement (241) de l'unité de boîte de transmission (24).

8. Transmission de véhicule (2) telle que revendiquée dans l'une quelconque des revendications 1 à 7, dans laquelle le vilebrequin (231) comprend :
une unité de passage central axial (237) qui a une partie de passage amont (237') permettant l'écoulement de l'huile de lubrification (25) quand celle-ci est amenée dans le vilebrequin (231), et une partie de passage aval (237") espacée de la partie de passage amont (237') et alignée par rapport à celle-ci, et qui a une partie d'extrémité d'introduction de palier (237A) qui forme une partie de la partie d'extrémité d'introduction (235) du vilebrequin (231) et qui communique avec l'espace de lubrification (253) dans la partie d'extrémité de stockage d'huile (252) de l'arbre entraîné (232) de l'unité de carter de vilebrequin (23) ; et
un élément formant conduit creux (236) qui définit une chambre intérieure allongée parallèle aux parties de passage amont et aval (237, 237") de l'unité de passage central (23) et communiquant avec les parties de passage amont et aval (237, 237") de l'unité de passage central (237) de manière à permettre l'écoulement de l'huile de lubrification (25) de la partie de passage amont (237') jusque dans la partie de passage aval (237") en passant par la chambre intérieure définie dans l'élément formant conduit (236).

9. Transmission de véhicule (2) telle que revendiquée dans la revendication 8, dans laquelle la partie d'extrémité d'introduction de palier (237A) de la partie de passage aval (237") de l'unité de passage central (237) dans le vilebrequin (231) a un diamètre qui est plus petit que celui du reste de la partie de passage aval (237"), de manière à produire un étranglement d'un débit de l'huile de lubrification (25) quand celle-ci s'écoule de l'unité de passage central (237) jusque dans l'espace de lubrification (253) défini dans la partie d'extrémité de stockage d'huile (252) de l'arbre entraîné (232).
